# EUROPEAN PATENT APPLICATION

(11) **EP 3 992 357 A1**
(43) Date of publication of application: **04.05.2022**
(21) Application number: 20834615.5
(22) Date of filing: 02.07.2020
(51) Int. Cl.: D06M 15/55, D06M 15/21, D06M 13/352, D06M 101/32, D06M 101/34, D06M 101/16

(54) **COMPOSITION FOR SURFACE TREATMENT OF FIBERS AND FIBER TREATMENT METHOD**

(30) Priority: 03.07.2019 CN 201910596914
(71) Applicant: Beijing University of Chemical Technology, Beijing 100029 (CN)
(72) Inventor: NING, Nanying, Beijing 100029 (CN); HUANG, Wei, Beijing 100029 (CN); TIAN, Ming, Beijing 100029 (CN); WANG, Wencai, Beijing 100029 (CN); ZHANG, Liqun, Beijing 100029 (CN); YU, Bing, Beijing 100029 (CN)
(74) Representative: Kreuels, Justus
(86) International application number: PCT/CN2020/099939
(87) International publication number: WO 2021/000918

(57) **Abstract**

The invention discloses a composition for fiber surface treatment and a process for treating a fiber. The fiber surface treatment composition of the invention includes maleic anhydride polymer, epoxy resin, blocked isocyanate, curing agent, rubber latex, solvent and optional filler. The fiber treated by the invention has excellent adhesion effects, reaching or even exceeding the adhesion level of RFL treatment.

## Description

### Field of the Invention

The invention belongs to the field of fiber impregnation, particularly relates to a composition for fiber surface treatment and a process for treating a fiber.

### Background of the Invention

Various fibers and cords are used as rubber reinforcement in vast products such as tires, hoses and conveyor belts. The good elasticity of the rubber matrix is used to withstand the large deformation of composite material when it is stressed, and the fiber skeleton material is used to resist the damage caused by the stress to the composite material because of its higher strength and rigidity. The interfacial adhesion between fiber and rubber matrix determines admissible power transmission and fatigue life of composite materials. However, due to the high crystallinity and chemical inertness of pristine fibers, there is a weak interfacial interaction between fiber and rubber.

Since 1935, resorcinol-formaldehyde-latex (RFL) impregnation method has become the most effective way to improve the adhesion between fiber and rubber. The impregnation mechanism of RFL treatment is that resorcinol-formaldehyde thermosetting resin phase interacts with polar groups on the surface of the fiber, thanks to its hydroxyl groups. At the same time, the rubber latex phase can be cross-linked with the rubber matrix through co-vulcanization process to enhance the adhesion effect between the fiber and the rubber. However, resorcinol and formaldehyde have great harm to human health and environment. Formaldehyde and resorcinol were listed as carcinogens by the International Cancer Research Center. Resorcinol and formaldehyde are forbidden during tire production in many countries. Therefore, there is an urgent need to develop a new environmentally friendly fiber impregnation treatment system to replace the traditional RFL treatment method.

US2012004111A, US5565507A, US20150314644A disclose RF-free dipping solution with epoxy resin as the main body. Among them, US20120041113A discloses a dipping solution composed of epoxy resin, blocked isocyanate, amine curing agent, and latex, which is used for one-step treatment of polyester and nylon fibers. US5565507A discloses a dipping solution composed of epoxy resin with at least trifunctional group and latex containing carboxyl group, pyridine group or amino group, which is used to enhance the adhesion between cord fabrics and rubber. US20150314644 discloses a dipping solution composed of epoxy resin, polyamine with molecular weight higher than 190 Dalton and rubber latex, which is used to improve the adhesion between cords and rubber, and has an adhesion effect that is equivalent to RFL.

US20150259560 and US20150315410 disclose RF-free dipping solution with acrylic resin and epoxy resin as the main body. Among them, US20150259560 discloses an adhesive formulation composed of acrylic resin, epoxy compound, isocyanate and rubber latex, which is used to enhance the adhesion between fiber cord, fabrics and rubber. US20150315410 discloses a dipping solution composed of acrylic resin with carboxyl group, epoxy resin, blocked isocyanate, styrene-butadiene latex or styrene-butadiene vinyl pyridine latex. It is stated that its adhesion effect is better than that of RFL dipped fibers.

US7256235, US7482290, US20040249053 describe RF-free dipping solution with maleinized polymer as the main body. Among them, US20040249053 discloses a dipping solution composed of maleinized polymer and latex with carboxyl group and pyridine, which is used for treating epoxy activated polyester fibers. US7482290 discloses a dipping solution composed of maleinized imide polymer, metallic salt of α,β-ethylenically unsaturated carboxylic acid, and latex, which is used to improve the adhesion between fiber fabrics and rubber. US7256235 discloses a kind of dipping solution composed of half-ester of maleinized liquid poly-butadiene, chlorosulfonated polyethylene or blends thereof, carbon black and latex, which is used to improve the adhesion between fiber fabrics and EPDM rubber, and is suitable for high temperature resistant conveyor belt.

KR2018110986A discloses a two-step dipping system. The first dipping solution comprises epoxy resin, isocyanate, while the second dipping solution comprises epoxy resin, isocyanate, polyurethane dispersion PUD resin, amine compounds and latex. It is stated that the adhesion effect is better than that of RFL dipped fibers.

CN110284326A discloses a dipping solution composed of special amino resin, blocked isocyanate, additives and latex. The adhesion effect of nylon fiber treated by this method can reach that of RFL.

CN106120350A discloses a dipping solution composed of tannic acid, polyamine and latex and a canvas gum dipping preparation method. The adhesion effect of the polyester cords treated by this method is equivalent to that of RFL, and the adhesion effect at high temperature is better than that of RFL.

Although the above reference documents disclose some RF-free impregnation treatment methods, there are still no commercialized fiber cords that are treated by a RF-free dipping solution.

### Detailed description of the invention

In the first aspect, the invention provides a composition for fiber surface treatment. The composition has excellent adhesive strength and does not contain resorcinol-formaldehyde.

The composition provided for fiber surface treatment includes the following components: maleic anhydride polymer, epoxy resin, blocked isocyanate, curing agent, rubber latex, solvent and optional filler.

According to some embodiments of the invention, the weight parts of each component in the composition are as follows:
100 parts of solvent;
0.1-5 parts, preferably 0.5-2.5 parts by weight of maleic anhydride polymer;
0.1-5 parts, preferably 1-4 parts by weight of epoxy resin;
1-8 parts, preferably 2-4 parts by weight of blocked isocyanate;
0.1-1 parts, preferably 0.2-0.6 parts by weight of curing agent;
50-150 parts, preferably 70-120 parts by weight of latex;
0-30 parts, preferably 2-20 parts by weight of filler.

According to some embodiments of the invention, the maleic anhydride polymer is selected from at least one of maleic anhydride grafted polybutadiene, maleic anhydride grafted polyisoprene, maleic anhydride grafted styrene-butadiene binary copolymer. Maleic anhydride grafted polybutadiene is preferably used.

According to some embodiments of the invention, the grafting rate of maleic anhydride is 10-50%.

According to some embodiments of the invention, the number average molecular weight of maleic anhydride polymer is 3000-10000.

According to some embodiments of the invention, the epoxy resin can be dissolved in water or latex emulsion. The epoxy resin is selected from at least one of bisphenol A epoxy resin, epoxidized linear phenolic resin, ethylene glycol diglycidyl ether, polyethylene glycol diglycidyl ether, 1,2-propanediol diglycidyl ether, polypropylene glycol diglycidyl ether, 1,4-butanediol diglycidyl ether, polybutylene glycol diglycidyl ether, glycerol triglycidyl ether, trimethylolpropane glycidyl ether, tetraphenol ethane tetraglycidyl ether epoxy resin, sorbitol glycidyl ether, resorcinol bisglycidyl ether-type epoxy and bisresorcinol formal tetraglycidyl ether. Water -soluble epoxy is preferably used in this invention, such as glycerol triglycidyl ether, ethylene glycol diglycidyl ether and sorbitol glycidyl ether.

According to some embodiments of the invention, the curing agent is selected from at least one of imidazole curing agent, amine curing agent and anhydride curing agent.

According to some embodiments of the invention, the imidazole curing agent is selected from at least one of 2-methylimidazole, 2-ethyl-4-methylimidazole, 2-undecylimidazole, 2-heptadecylimidazole, 2-phenylimidazole, 1-benzyl-2-methylimidazole, 1-cyanoethyl-2-methylimidazole, 1-cyanoethyl-2-ethyl-4-methylimidazole and 1-cyanoethyl-2-undecylimidazole. 1-cyanoethyl-2-ethyl-4-methylimidazole is preferably used in this invention.

According to some embodiments of the invention, the amine curing agent is selected from at least one of hyperbranched polyamide, hyperbranched polyethyleneimine, supramolecular polyoxyethylene amine, polyoxyethylene diamine and polyamide. Hyperbranched polyethyleneimine is preferably used in this invention.

According to some embodiments of the invention, the anhydride curing agent is selected from at least one of phthalic anhydride, tetrahydrophthalic anhydride, hexahydrophthalic anhydride, trimellitic anhydride glyceride, methylhexahydrophthalic anhydride, methylnadic anhydride, pyromellitic anhydride, ethylene glycol trimellitic anhydride, methylcyclohexene tetraacetic anhydride, trimellitic anhydride and polynonylanhydride. Trimellitic anhydride is preferably used in this invention.

According to some embodiments of the invention, the blocked isocyanate is formed by isocyanate and blocking agent. The isocyanate is selected from at least one of trimethyl-1,6-hexamethylene diisocyanate, tetramethylene diisocyanate, tetramethylenediisocyanate, 2,4-toluene diisocyanate, 2,6-toluene diisocyanate, 1,3-benzene diisocyanate, 1,4-phenyldiisocyanate, isophorone diisocyanate and diphenylmethane diisocyanate. The blocking agent is selected from ε-caprolactam, butanone oxime and phenol. Caprolactam-terminated diphenylmethane diisocyanate is preferably used in this invention.

According to some embodiments of the invention, the solvent is aqueous. The solvent is preferably water, more preferably deionized water.

According to some embodiments of the invention, the fillers are selected from at least one of nano silica, carbon black, nano titanium dioxide, nano zinc oxide, nano iron oxide, nano calcium oxide, nano calcium carbonate, carbon nanotubes, attapulgite, nano cellulose, halloysite, nano aramid fiber, basalt fiber, nano whisker, graphene oxide, montmorillonite, mica, kaolin and hydrotalcite. Nano cellulose, nano silica, montmorillonite and carbon nanotubes are preferably used in this invention.

According to some embodiments of the invention, the filler is treated with a surface modifier.

According to some embodiments of the invention, the surface modifier is selected from at least one of amino silane coupling agent, epoxy silane coupling agent, alkyl silane coupling agent, isocyanate-based silane coupling agent and polyether silane coupling agent. γ-aminopropyltriethoxysilane (KH550), γ-glycidoxypropyl trimethoxysilane (KH560), γ- methacryloxypropyl trimethoxysilane (KH570), γ-mercaptopropyltriethoxysilane (KH580), bis-[γ-(triethoxysilyl)propyl] tetrasulfide (Si69) and vinyl triethoxy silane (A151) are preferably used in this invention.

According to some embodiments of the invention, the rubber latex is selected from at least one of butylpyridyl latex, styrene-butadiene latex, styrene-butadiene-vinylpyridine latex, neoprene latex, nitrile latex, chlorosulfonated polyethylene latex, natural latex and epoxidized natural latex. The styrene-butadiene latex is preferably carboxyl styrene-butadiene latex; the nitrile latex is preferably carboxyl nitrile latex; the natural rubber latex is preferably epoxidized natural rubber latex.

According to some embodiments of the invention, the solid content of rubber latex is 20 ~ 60wt%.

In the second aspect, the invention provides a process for treating a fiber surface, wherein the process comprises:
In step 1) fibers are immersed in dipping solution, wherein the dipping solution is prepared from the composition according to the first aspect of the invention.
In step 2) dry and solidify the impregnated fiber obtained from step 1).

According to some embodiments of the invention, the dipping solution in step 1) comprises: maleic anhydride polymer, epoxy resin, blocked isocyanate, curing agent, rubber latex, solvent and optional filler.

According to some embodiments of the invention, the weight parts of each component in the composition in step 1) are as follows:
100 parts of solvent;
0.1-5 parts, preferably 0.5-2.5 parts by weight of maleic anhydride polymer;
0.1-5 parts, preferably 1-4 parts by weight of water-soluble epoxy resin;
0.1-1 parts, preferably 0.2-0.6 parts by weight of curing agent;
1-8 parts, preferably 2-4 parts by weight of blocked isocyanate;
0-30 parts, preferably 2-20 parts by weight of filler;
50-150 parts, preferably 70-120 parts by weight of rubber latex(solid content: 20-60wt%).

According to some embodiments of the invention, the impregnation temperature is 15-40°C, and the impregnation time is 2-60s.

According to some embodiments of the invention, the drying temperature is 100-150 °C, and the drying time is 1-10 min; the temperature for curing is 180-260 °C, and the time for curing is 1-10 min.

According to some embodiments of the invention, in step 1), the pH value of the dipping solution is adjusted to be alkaline before impregnation. In the preferred embodiment of the invention, the pH of the dipping solution was adjusted to be alkaline by using potassium hydroxide solution or ammonia solution. For example, the pH is 8.0-11.0.

In the third aspect, the invention provides a process for treating a fiber surface, wherein the process comprises:
In step A), the fibers are immersed in the first dipping solution. The first dipping solution comprises the first epoxy resin, blocked isocyanate and solvent.
In step B), the fibers immersed in step A) are dried and then cured.
In step C), the fibers treated in step B) are immersed in the second dipping solution. The second dipping solution comprises maleic anhydride polymer, the second epoxy resin, curing agent, rubber latex, solvent and optional filler.
In step D), the fibers immersed in step C) are dried and then cured.

According to some embodiments of the invention, in step A), the impregnation temperature is 15-40°C, and the impregnation time is 2-30s.

According to some embodiments of the invention, in step B), the drying temperature is 100-150 °C, and the drying time is 1-10 min.

According to some embodiments of the invention, in step B), the temperature for curing is 180-260 °C, and the time for curing is 1-10 min.

According to some embodiments of the invention, in step C), the impregnation temperature is 15-40°C, and the impregnation time is 2-60s.

According to some embodiments of the invention, in step D), the drying temperature is 100-150 °C, and the drying time is 1-10 min.

According to some embodiments of the invention, in step D), the temperature for curing is 180-260 °C, and the time is 1-10 min.

According to some embodiments of the invention, the pH value of the second dipping solution is adjusted to be alkaline before impregnation, preferably 8.0-11.0.

According to some embodiments of the invention, the weight parts of each component in the first dipping solution are as follows:
100 parts of solvent;
0.5-4 parts, preferably 0.5-2.5 parts by weight of the first epoxy resin;
2-10 parts, preferably 4-8 parts by weight of blocked isocyanate;

According to some embodiments of the invention, the weight parts of each component in the second dipping solution are as follows:
100 parts of solvent;
1-2.5 parts of maleic anhydride polymer;
1-5 parts, preferably 2.5-4 parts by weight of the second epoxy resin;
0.1-1 parts, preferably 0.2-0.6 parts by weight of curing agent;
0-30 parts, preferably 2-20 parts by weight of filler;
50-150 parts, preferably 70-120 parts by weight of latex.

According to some embodiments of the invention, the type and dosage of maleic anhydride polymer, epoxy resin, blocked isocyanate, curing agent, latex, solvent and filler are the same as those mentioned above, which will not be repeated here.

According to some embodiments of the invention, the first epoxy resin and the second epoxy resin may be the same or different. The first epoxy resin and the second epoxy resin can be dissolved in water or latex emulsion. The epoxy resin is selected from at least one of bisphenol A epoxy resin, epoxidized linear phenolic resin, ethylene glycol diglycidyl ether, polyethylene glycol diglycidyl ether, 1,2-propanediol diglycidyl ether, polypropylene glycol diglycidyl ether, 1,4-butanediol diglycidyl ether, polybutylene glycol diglycidyl ether, glycerol triglycidyl ether, trimethylolpropane glycidyl ether, tetraphenol ethane tetraglycidyl ether epoxy resin, sorbitol glycidyl ether, resorcinol bisglycidyl ether type epoxy and bisresorcinol formal tetraglycidyl ether. Water-soluble epoxy is preferably used in this invention, such as glycerol triglycidyl ether, ethylene glycol diglycidyl ether and sorbitol glycidyl ether. In one embodiment, sorbitol glycidyl ether was selected as the first epoxy resin, glycerol triglycidyl ether or ethylene glycol diglycidyl ether was selected as the second epoxy resin.

According to some embodiments of the invention, the fibers are selected from rayon, nylon 6, nylon 66, meta or para aramid fiber, polyethylene terephthalate (PET), polyethylene naphthalate (PEN), polyimide, carbon fiber, also including a combination of two or more of all the fibers mentioned.

According to some embodiments of the invention, the forms of the fibers are selected from single silk, bundle silk, twisted cord, canvas, cord fabric or a combination thereof.

The invention provides a novel composition for fiber surface treatment. According to different fiber types and uses, one-step dipping process (the process according to the second aspect of the invention) or two-step dipping process (the process according to the third aspect of the invention) can be selected. Water-soluble fillers can be added or not. The fillers can be modified or not. This process can greatly improve the adhesion between fiber and rubber and can achieve the purpose of replacing RFL.

The composition of the invention does not contain resorcinol, formaldehyde and other toxic and harmful components, and will not cause harm to the human body and environment. The fibers treated by the invention have an excellent adhesion effect and can replace the traditional RFL technology. At the same time, the composition will not damage the strength of the fibers and will not affect their use.

In the composition of the invention, all raw materials are industrialized products and are easy to obtain. The fiber surface treatment method is simple and easy to operate, and can be mass-produced. For example, when dealing with fibers with inert surfaces such as aramid fibers, the two-step dipping process has a better effect. The isocyanate and epoxy resin in the first-bath formula can react with the amide group on the aramid surface at high temperature, which can greatly improve the surface activity of aramid fibers. The epoxy resin and maleic anhydride polymer in the second-bath formula can react with the activated fiber surface groups and form a resin network under the action of the curing agent, which can significantly improve the adhesion between the fiber and the rubber.

Fillers are added to the composition of the invention, which further improves the adhesion between the fiber and the rubber.

The advantages and characteristics of the invention are as follows:
1. The composition for fiber surface treatment of the invention is environmentally friendly, harmless to the human body and environment, low cost of raw materials, greatly improved adhesion performance, and can replace RFL.
2. In this invention, the epoxy is water-soluble; the modified fillers have good dispersion; the dipping solution is stable, and the viscosity will not increase significantly after long-term storage at room temperature, which is beneficial to long-term storage and transportation.
3. In the invention, the preparation of the dipping solution and the fiber treatment process are simple, which is conducive to industrial production.
4. The treated cord fabric of the invention is light yellow, and the addition of different fillers will affect the color, which provides the possibility of producing cord fabrics with different colors.

### Examples

The materials used in the following examples and comparative examples are all commercially available, including:
Glycerol triglycidyl ether: CAS 13236-02-7, purchased from Beijing Hanlongda Technology Development Co., Ltd.
Ethylene glycol diglycidyl ether: CAS 2224-15-9, purchased from Beijing Hanlongda Technology Development Co., Ltd.
Sorbitol glycidyl ether: CAS 68412-01-1, purchased from Nanya Epoxy Co., Ltd.
Hyperbranched polyethyleneimine: CAS 9002-98-6, purchased from Beijing Huawei Ruike Chemical Co., Ltd, the weight average molecular weight is 1200.
Anhydride grafted polybutadiene: Purchased from Cleverley (Guangzhou) Chemical Co., Ltd, the number average molecular weight of maleic anhydride is about 5000, and the grafting ratio of maleic anhydride is 20-50%. Its molecular structure is : 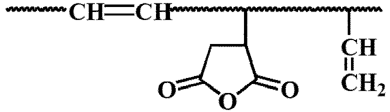
1-cyanoethyl-2-ethyl-4methylimidazole: CAS 23996-25-0, purchased from Shanghai Myrell Chemical Technology Co., Ltd.
ε-caprolactam-terminated diphenylmethane diisocyanate: CAS 5101-68-8, brand CBI 50, purchased from Changzhou keying Chemical Co., Ltd.
Styrene-butadiene-vinylpyridine latex (VP latex): brand VP-15, purchased from Jiangsu Yatai Chemical Co., Ltd, solid content 40wt%.
Concentrated natural rubber latex: Purchased from Hainan Natural Rubber Industry Group Co., Ltd, solid content 60wt%.
Fillers: Nano titanium dioxide (Shanghai meiruier Chemical Technology Co., Ltd, particle size is 40 nm); montmorillonite (Nanocor, G105); attapulgite (Jiangsu Shengyi nanotechnology Co., Ltd, purification of type 601); graphene oxide (Shandong opal new materials Co., Ltd., OBO-GO-P2); carbon nanotubes (Beijing Deke Daojin Technology Co., Ltd, CNT107).
γ - aminopropyl triethoxysilane ( KH550 ) : CAS 919-30-2, purchased from Beijing hanlongda Technology Development Co., Ltd.
Resorcinol: CAS 108-46-3, purchased from Shanghai Aladdin Biochemical Technology Co., Ltd, purity ≥ 99wt%.
Formaldehyde: CAS 50-00-0, purchased from Shanghai Aladdin Biochemical Technology Co., Ltd, purity 37wt%.

The preparation methods of the H pull-out force test specimens in the following examples and comparative examples are as follows:
Referring to standard GB/T2942-2009, the standard rubber (the formula refers to GBT9101-2017) is completely covered on the dipped cords, then it is vulcanized on the plate curing press. The vulcanizing temperature is 136 °C, the vulcanizing pressure is 15 MPa, and the vulcanizing time is 50 min.

The preparation method of peel force test spline is as follows:
Referring to the peel out method of Shenma Industry Co., Ltd. to measure the adhesion of single nylon 66 cord. The standard rubber is completely covered on the dipped cords, then it is vulcanized on the plate curing press. The vulcanizing temperature is 160 °C, the vulcanizing pressure is 2.354 MPa, and the vulcanizing time is 20 min.

The tensile strength test method of the cord is as follows:
Referring to standard GB/T32108-2015, the cord is clamped under the tension tester for testing, the stretching speed is 300±5 mm/min.

In the following examples and comparative examples, the tensile strength test method of cord refers to GB/T32108-2015; the H pull-out force test refers to GB/T2942-2009; the method of peel test is as follows:
(1) Vulcanization mold size: the depth of membrane cavity is 2mm, the length is 250mm, the width is 170mm, the width of the sample is 20 mm, and the interval between samples is 6 mm, keep 10 mm on both sides of the mold.
(2) The formula of rubber compound is the same as that of H pull-out test.
(3) Vulcanization process: 160°C×20min, the pressure is 2.354Mpa.
(4) Vulcanization process: 1) preheat the mold at 136 °C for 15 ~ 20min, then place the single cord into the groove and tension the cord vertically. 2)Place a rubber sheet with a length of 20mm, a width of 160mm and a thickness of 0.5mm at the bottom of the mold near the frame, and attach cellophane with a size slightly larger than that of the rubber sheet onto it. 3) Place a rubber sheet with a length of 240mm, a width of 160mm and a thickness of 1.7mm on the cellophane. At the same time, attach the same size cord fabric to it. Then it is vulcanized. The peel test is performed after two hours after vulcanization, and then trim the sample to test the peel force (each sample contains 5 cords).
(5) Test process: Clamp the parts separated by cellophane into the upper and lower chucks of the tensile machine at an angle of 180°, then peel off the fiber cord and rubber. The speed of tension machine is set at 300 mm / min, the peeling length is (150±10) mm. Read the average adhesive force (N) from the peel curve, and calculate the peel adhesive force of a single cord.

In the Examples and Comparative Examples, the weight average molecular weight of the hyperbranched polymer was determined by static light scattering method, and the relative number average molecular weight of other linear polymers was determined by GPC.

### Example 1

An eco-friendly impregnation treatment system for fiber cords, the proportion of one-step dipping process formula by weight is as follows:

| | |
|---|---|
| Formula of one-step dipping solution | 100 parts of deionized water |
| | 0.5 parts of maleic anhydride grafted polybutadiene (grafting rate 20%) |
| | 0.8 parts of glycerol triglycidyl ether |
| | 0.3 parts of 1-cyanoethyl-2-ethyl-4methylimidazole |
| | 3 parts of ε-caprolactam -terminated diphenylmethane diisocyanate |
| | 100 parts of styrene-butadiene-vinylpyridine latex (solid content 40wt%) |

Preparation of dipping solution: all components (except latex) were dissolved in deionized water at a predetermined weight ratio. The solution was strongly stirred at 500rpm with an electric stirrer at 25°C for 1.5h. Then, styrene-butadiene vinyl pyridine latex was added to the solution. The mixed solution was strongly stirred at 25°C for 2h. During stirring, potassium hydroxide was added to adjust the pH of the solution to 8.7.

Dipping method: the fiber cords were immersed in the dipping solution for 3 seconds. Then, the cords were dried and cured in an oven. The drying temperature was 150°C, the drying time was 3min, the curing temperature was 210°C, and the curing time was 3min.

### Example 2

An eco-friendly impregnation treatment system for fiber cords, the proportion of one-step dipping process formula by weight is as follows:

| | |
|---|---|
| Formula of one-step dipping solution | 100 parts of deionized water |
| | 2.5 parts of maleic anhydride grafted polybutadiene (grafting rate 20%) |
| | 2.5 parts of glycerol triglycidyl ether |
| | 0.3 parts of 1-eyanoethyl-2-ethyl-4methylimidazole |
| | 3 parts of ε-caprolactam -terminated diphenylmethane diisocyanate |
| | 100 parts of styrene-butadiene-vinylpyridine latex (solid content 40wt%) |

The preparation method of the dipping solution was the same as that of example 1.

Dipping method: the fiber cords were immersed in the dipping solution for 3 seconds. Then, the cords were dried and cured in an oven. The drying temperature was 150°C, the drying time was 3min, the curing temperature was 210°C, and the curing time was 3min.

### Example 3

An eco-friendly impregnation treatment system for fiber cords, the proportion of one-step dipping process formula by weight is as follows:

| | |
|---|---|
| Formula of one-step dipping solution | 100 parts of deionized water |
| | 1.0 parts of maleic anhydride grafted polybutadiene (grafting rate 50%) |
| | 4.0 parts of ethylene glycol diglycidyl ether |
| | 0.3 parts of hyperbranched polyethyleneimine |
| | 3 parts of ε-caprolactam -terminated diphenylmethane diisocyanate |
| | 60 parts of styrene-butadiene-vinylpyridine latex (solid content 40wt%) and 20 parts of natural rubber latex (solid content 60wt%) |

The preparation method of the dipping solution was the same as that of example 1.

Dipping method: the fiber cords were immersed in the dipping solution for 3 seconds. Then, the cords were dried and cured in an oven. The drying temperature was 150°C, the drying time was 1.5min, the curing temperature was 225°C, and the curing time was 1.5min.

### Example 4

An eco-friendly impregnation treatment system for fiber cords, the proportion of one-step dipping process formula by weight is as follows:

| | |
|---|---|
| Formula of one-step dipping solution | 100 parts of deionized water |
| | 1.0 parts of maleic anhydride grafted polybutadiene (grafting rate 30%) |
| | 4.0 parts of glycerol triglycidyl ether |
| | 0.3 parts of 1-cyanoethyl-2-ethyl-4methylimidazole |
| | 3 parts of ε-caprolactam -terminated diphenylmethane diisocyanate |
| | 15 parts of nano titanium dioxide |
| | 100 parts of styrene-butadiene-vinylpyridine latex (solid content 40wt%) |

Preparation of dipping solution: Nano titanium dioxide and deionized water were added to the beaker. The mixture was performed with ultrasonic stirring, the power of ultrasonic equipment is 400W and the time of ultrasonic stirring is 1h, and dispersed filler was obtained. Then, all components (except latex) were dissolved in deionized water at a predetermined weight ratio. The solution was strongly stirred at 500rpm with an electric stirrer at 25°C for 2h. Next, styrene-butadiene vinyl pyridine latex was added to the solution. The mixed solution was strongly stirred at 500rpm with an electric stirrer at 25°C for 2.5h. During stirring, potassium hydroxide was added to adjust the pH of the solution to 9.0.

Dipping method: the fiber cords were immersed in the dipping solution for 3 seconds. Then, the cords were dried and cured in an oven. The drying temperature was 150°C, the drying time was 1.5min, the curing temperature was 225°C, and the curing time was 1.5min.

### Example 5

An eco-friendly impregnation treatment system for fiber cords, the proportion of one-step dipping process formula by weight is as follows:

| | |
|---|---|
| Formula of one-step dipping solution | 100 parts of deionized water |
| | 1.0 parts of maleic anhydride grafted polybutadiene (grafting rate 30%) |
| | 4.0 parts of glycerol triglycidyl ether |
| | 0.3 parts of 1-cyanoethyl-2-ethyl-4methylimidazole |
| | 3 parts of ε-caprolactam -terminated diphenylmethane diisocyanate |
| | 15 parts of modified nano titanium dioxide |
| | 100 parts of styrene-butadiene-vinylpyridine latex (solid content 40wt%) |

Preparation of dipping solution: Nano titanium dioxide and deionized water were added to the beaker. The mixed solution of modifier KH550/ethanol (KH550/ ethanol by volume ratio of 2:1, Ethanol (purity≥95wt%)) (the weight of KH550 is 10wt% of the filler) was slowly added to the mixed solution of nano titanium dioxide and deionized water. Then, the mixture was performed with ultrasonic stirring, the power of ultrasonic equipment is 400W and the time of ultrasonic stirring was 1h, and dispersed modified nano titanium dioxide was obtained. Next, all components (except latex) were dissolved in deionized water at a predetermined weight ratio. The solution was strongly stirred at 500rpm with an electric stirrer at 25°C for 2h. Finally, styrene-butadiene vinyl pyridine latex was added to the solution. The mixed solution was strongly stirred at 500rpm with an electric stirrer at 25°C for 2.5h. During stirring, potassium hydroxide was added to adjust the pH of the solution to 9.0.

Dipping method: the fiber cords were immersed in the dipping solution for 3 seconds. Then, the cords were dried and cured in an oven. The drying temperature was 150°C, the drying time was 1.5min, the curing temperature was 225°C, and the curing time was 1.5min.

### Example 6

An eco-friendly impregnation treatment system for fiber cords, the proportion of one-step dipping process formula by weight is as follows:

| | |
|---|---|
| Formula of one-step dipping solution | 100 parts of deionized water |
| | 2.5 parts of maleic anhydride grafted polybutadiene (grafting rate 30%) |
| | 2.5 parts of glycerol triglycidyl ether |
| | 0.3 parts of 1-cyanoethyl-2-ethyl-4methylimidazole |
| | 3 parts of ε-caprolactam -terminated diphenylmethane diisocyanate |
| | 7.5 parts of attapulgite |
| | 100 parts of styrene-butadiene-vinylpyridine latex (solid content 40wt%) |

The preparation method of the dipping solution was the same as that of example 4.

Dipping method: the fiber cords were immersed in the dipping solution for 3 seconds. Then, the cords were dried and cured in an oven. The drying temperature was 150°C, the drying time was 1.5min, the curing temperature was 230°C, and the curing time was 1.5min.

### Example 7

An eco-friendly impregnation treatment system for fiber cords, the proportion of one-step dipping process formula by weight is as follows:

| | |
|---|---|
| Formula of one-step dipping solution | 100 parts of deionized water |
| | 2.5 parts of maleic anhydride grafted polybutadiene (grafting rate 30%) |
| | 2.5 parts of glycerol triglycidyl ether |
| | 0.3 parts of 1-cyanoethyl-2-ethyl-4methylimidazole |
| | 3 parts of ε-caprolactam -terminated diphenylmethane diisocyanate |
| | 7.5 parts of modified attapulgite |
| | 100 parts of styrene-butadiene-vinylpyridine latex (solid content 40wt%) |

The preparation method of the dipping solution was the same as that of example 5.

Dipping method: the fiber cords were immersed in the dipping solution for 3 seconds. Then, the cords were dried and cured in an oven. The drying temperature was 150°C, the drying time was 1.5min, the curing temperature was 230°C, and the curing time was 1.5min.

### Example 8

An eco-friendly impregnation treatment system for fiber cords, the proportion of one-step dipping process formula by weight is as follows:

| | |
|---|---|
| Formula of one-step dipping solution | 100 parts of deionized water |
| | 1.0 parts of maleic anhydride grafted polybutadiene (grafting rate 50%) |
| | 4 parts of ethylene glycol diglycidyl ether |
| | 0.3 parts of trimellitic anhydride |
| | 3 parts of ε-caprolactam -terminated diphenylmethane diisocyanate |
| | 10.0 parts of montmorillonite |
| | 60 parts of styrene-butadiene-vinylpyridine latex (solid content 40wt%) and 20 parts of natural rubber latex (solid content 60wt%) |

The preparation method of the dipping solution was the same as that of example 4.

Dipping method: the fiber cords were immersed in the dipping solution for 3 seconds. Then, the cords were dried and cured in an oven. The drying temperature was 150°C, the drying time was 3min, the curing temperature was 210°C, and the curing time was 3min.

### Example 9

An eco-friendly impregnation treatment system for fiber cords, the proportion of one-step dipping process formula by weight is as follows:

| | |
|---|---|
| Formula of one-step dipping solution | 100 parts of deionized water |
| | 1.0 parts of maleic anhydride grafted polybutadiene (grafting rate 50%) |
| | 4 parts of ethylene glycol diglycidyl ether |
| | 0.3 parts of trimellitic anhydride |
| | 3 parts of ε-caprolactam -terminated diphenylmethane diisocyanate |
| | 10.0 parts of modified montmorillonite |
| | 60 parts of styrene-butadiene-vinylpyridine latex (solid content 40wt%) and 20 parts of natural rubber latex (solid content 60wt%) |

The preparation method of the dipping solution was the same as that of example 5.

Dipping method: the fiber cords were immersed in the dipping solution for 3 seconds. Then, the cords were dried and cured in an oven. The drying temperature was 150°C, the drying time was 3min, the curing temperature was 210°C, and the curing time was 3min.

### Example 10

An eco-friendly impregnation treatment system for fiber cords, the proportion of one-step dipping process formula by weight is as follows:

| | |
|---|---|
| Formula of one-step dipping solution | 100 parts of deionized water |
| | 2.5 parts of maleic anhydride grafted polybutadiene (grafting rate 20%) |
| | 2.5 parts of glycerol triglycidyl ether |
| | 0.3 parts of 1-cyanoethyl-2-ethyl-4methylimidazole |
| | 3 parts of ε-caprolactam -terminated diphenylmethane diisocyanate |
| | 5 parts of modified nano cellulose and 4 parts of modified graphene oxide |
| | 50 parts of styrene-butadiene-vinylpyridine latex (solid content 40wt%) and 20 parts of natural rubber latex (solid content 60wt%) |

The preparation method of the dipping solution was the same as that of example 5.

Dipping method: the fiber cords are immersed in the dipping solution for 3 seconds. Then, the cords were dried and cured in an oven. The drying temperature was 150°C, the drying time was 2min, the curing temperature was 220°C, and the curing time was 2min.

### Comparative example 1

Traditional RFL impregnated fiber cords are the contrast example 1. The proportion of RFL dipping process formula by weight is as follows:

| Composition | Amount |
|---|---|
| Deionized water | 100 parts |
| Resorcinol | 3.7 parts |
| Formaldehyde (37wt%) | 5.4 parts |
| Sodium hydroxide (100wt%) | 0.1 parts |
| VP latex (solid content 40wt%) | 80.0 parts |
| Ammonia water (25wt%) | 1.0 parts |

The preparation method of RFL dipping solution: 0.1 parts of sodium hydroxide and 100 parts of deionized water were added into the beaker. The mixture was strongly stirred at 500rpm with an electric stirrer for 10min. Then, 3.7 parts of resorcinol were added into the mixture for another 10min. The mixture was stirred for 6h followed by addition of 5.4 parts of formaldehyde (37wt%), and a homogeneous reaction solution was obtained.

The mixture was mixed with 80.0 parts of VP latex at room temperature for 20h. Before the end of the stirring, 1.0 parts of ammonia water was added into the solution, and finally get the RFL dipping solution.

Dipping method of RFL solution: the fiber cords were immersed in the dipping solution for 3 seconds. Then, the cords were dried and cured in an oven. The drying temperature was 150°C, the drying time was 2min, the curing temperature was 225°C, and the curing time was 2min.

The fiber cords were treated by one-step dipping process in examples 1-10. PA 66 cords (1170dtex/2) were used in example 1, 2; PA 66 cords (1400dtex/2) were used in examples 3, 4, 5; PA 66 cords (1870dtex/2) were used in example 6-10. The fiber cords were treated by RFL in contrast examples 1-3. PA 66 cords (1170dtex/2) were used in contrast example 1; PA 66 cords (1400dtex/2) were used in contrast example 2; PA 66 cords (1870dtex/2) were used in contrast example 3.

The fiber cords of examples 1-10 and comparative examples 1-3 were dipped and tested according to the above method. The result of H pull-out force test, peel test and tensile strength test are shown in Table 1.

**Table 1 the test results of fiber cords treated by one-step dipping process**

| Group | Fiber type | Sample characteristics | Adhesive property | | | tensile strength (N) |
|---|---|---|---|---|---|---|
| | | | H pull-out value (N) | Peel force value (N) | coverage rating | |
| Example 1 | PA 6 (1170dtex/2) | 0.8 parts of EP+0.5 parts of PBMA+no filler | 120.6±15.4 | 12.4±1.3 | B | 175.8±2.9 |
| Example 2 | PA 6 (1170dtex/2) | 2.5 parts of EP+2.5 parts of PBMA+no filler | 155.9±14.2 | 17.8±1.7 | A | 175.4±3.4 |
| Example 3 | PA 66 (1400dtex/2) | 4.0 parts of EP+1.0 parts of PBMA+no filler | 173.6±14.0 | 23.6±1.0 | A | 209.3±3.7 |
| Example 4 | PA 66 (1400dtex/2) | 4.0 parts of EP+1.0 parts of PBMA+15 parts of nano titanium dioxide | 188.9±12.8 | 25.7±1.2 | A | 210.5±2.3 |
| Example 5 | PA 66 (1400dtex/2) | 4.0 parts of EP+1.0 parts of PBMA+15 parts of modified nano titanium dioxide | 199.6±11.5 | 27.3±1.4 | A | 210.3±2.7 |
| Example 6 | PA 66 (1870dtex/2) | 2.5 parts of EP+2.5 parts of PBMA+7.5 parts of attapulgite | 201.2±13.6 | 28.1±1.1 | A | 286.2±2.1 |
| Example 7 | PA 66 (1870dtex/2) | 2.5 parts of EP+2.5 parts of PBMA+7.5 parts of modified attapulgite | 221.3±16.7 | 30.1±1.3 | A | 285.6±2.3 |
| Example 8 | PA 66 (1870dtex/2) | 4.0 parts of EP+1.0 parts of PBMA+10 parts of modified montmorilloni te | 200.2±11.6 | 28.3±1.2 | A | 285.9±2.7 |
| Example 9 | PA 66 (1870dtex/2) | 4.0 parts of EP+1.0 parts of PBMA+ 10 parts of modified montmorilloni te | 223.6±12.7 | 30.3±1.7 | A | 286.3±2.4 |
| Example 10 | PA 66 (1870dtex/2) | 2.5 parts of EP+2.5 parts of PBMA+5 parts of modified nano cellulose and 4 parts of modified graphene oxide | 222.4±13.2 | 31.1±1.5 | A | 286.2±3.2 |
| Contrast example 1 | PA 66 (1170dtex/2) | RFL | 156.3±13.2 | 17.5±1.6 | A | 174.2±4.4 |
| Contrast example 2 | PA 66 (1400dtex/2) | RFL | 172.3±11.4 | 22.6±1.3 | A | 209.5±2.7 |
| Contrast example 3 | PA 66 (1870dtex/2) | RFL | 183.6±12.8 | 26.2±1.7 | A | 285.2±2.4 |

| | | | | | | |
|---|---|---|---|---|---|---|
| Remarks: EP refers to epoxy resin and PBMA refers to maleic anhydride grafted polymer. | | | | | | |

In table 1, the H pull-out value of Example 2, 3 (with no filler) is equivalent to the RFL treatment effect of the Contrast example, and the peel force value of Example 2, 3 is even higher than that of the contrast example. The H pull-out value of Examples 4, 6, 8 (with unmodified filler) is about 10% higher than that of the RFL of the Contrast example, and the peel force value is also higher than that of the RFL. The H pull-out value of Examples 5, 7, 9, 10 (with modified filler) is about 15-20% higher than that of the RFL of the Contrast example, and the peel force value is also significantly improved compared to RFL. This shows that the new eco-friendly dipping system on the fiber surface has excellent adhesion effects, reaching or even exceeding the adhesion level of RFL treatment. In addition, the tensile strength of fiber cords will not be significantly reduced and will not affect its use after being treated by this method. It can be seen from Examples 4-10 that the H pull-out value and peel force value can be further improved by adding suitable fillers. The adhesion effects of the new eco-friendly dipping system has been further improved by this way. At the same time, the modification of fillers is conducive to improving its dispersion in the dipping solution, which is more beneficial to the improvement of the adhesion effects. It can be seen from Examples 5, 7, 9 and 10 that the addition of different shapes of fillers (including granular packing, rod packing, flake packing) has a good effect. The results of the experiment were as expected, the modulus of the dipping layer is adjusted by adding fillers in the dipping solution, and a modulus transition layer is constructed between the fiber and the rubber, which can improve the interface adhesion. In Examples 2-10, the rubber coverage rating of stripped fiber cords reaches 100%. This shows that the dipping system has a stable adhesion effect and can meet the application requirements.

The fiber cords were treated by a two-step dipping process in examples 11-15. Aramid cords (1670dtex/2) were used in examples 11, 14. Polyester cords (1400dtex/2) were used in examples 12, 15. Aramid/nylon 66 twisted cords (A1670dtex/1+N1400dtex/1) were used in example 13. The fiber cords were treated by RFL in contrast examples 4-6. Aramid cords (1670dtex/2) were used in contrast example 4. Polyester cords (1400dtex/2) were used in contrast example 5. Aramid/nylon 66 twisted cords (A1670dtex/1+N1400dtex/1) were used in contrast example 6.

### Example 11

An eco-friendly impregnation treatment system for fiber cords, the proportion of two-step dipping process formula by weight is as follows:

| | |
|---|---|
| Formula of the first-step dipping solution | 100 parts of deionized water |
| | 1.5 parts of sorbitol glycidyl ether |
| | 5 parts of ε-caprolactam -terminated diphenylmethane diisocyanate |
| Formula of the second-step dipping solution | 100 parts of deionized water |
| | 2.5 parts of maleic anhydride grafted polybutadiene (grafting rate 20%) |
| | 2.5 parts of glycerol triglycidyl ether |
| | 0.3 parts of 1-cyanoethyl-2-ethyl-4-methylimidazole |
| | 100 parts of styrene-butadiene-vinylpyridine latex (solid content 40wt%) |

Preparation of the first dipping solution: sorbitol glycidyl ether, ε-caprolactam - terminated diphenylmethane diisocyanate and deionized water were added into the beaker. The mixture was strongly stirred at 500rpm with an electric stirrer at 25°C for 1h.

Preparation of the second dipping solution: the maleic anhydride grafted polybutadiene, glycerol triglycidyl ether and 1-cyanoethyl-2-ethyl-4-methylimidazole were added into deionized water according to the predetermined proportion. The mixture was strongly stirred at 500rpm with an electric stirrer at 25°C for 1h. Then, styrene-butadiene vinyl pyridine latex was added to the solution. The mixed solution was strongly stirred at 25°C for 2h. During stirring, potassium hydroxide was added to adjust the pH of the solution to 9.0.

Dipping method: the fiber cords were immersed in the first dipping solution for 3 seconds. Then, the cords were dried and cured in an oven. The drying temperature was 150°C, the drying time was 1.5min, the curing temperature was 230°C, and the curing time was 1.5min. Next, the pre-impregnated cords were immersed in the second dipping solution for 3 seconds. The cords were dried and cured in an oven. The drying temperature was 150°C, the drying time was 1.5min, the curing temperature was 250°C, and the curing time was 1.5 min.

### Example 12

An eco-friendly impregnation treatment system for fiber cords, the proportion of the two-step dipping process formula by weight is as follows:

| | |
|---|---|
| Formula of the first-step dipping solution | 100 parts of deionized water |
| | 1.5 parts of sorbitol glycidyl ether |
| | 3 parts of ε-caprolactam-terminated diphenylmethane diisocyanate and 2 parts of phenol-terminated isophorone diisocyanate |
| Formula of the second-step dipping solution | 100 parts of deionized water |
| | 1 parts of maleic anhydride grafted polybutadiene (grafting rate 50%) |
| | 4 parts of glycerol triglycidyl ether |
| | 0.3 parts of hyperbranched polyethyleneimine |
| | 18 parts of modified nano titanium dioxide |
| | 60 parts of styrene-butadiene-vinylpyridine latex (solid content 40wt%) and 20 parts of natural rubber latex (solid content 60wt%) |

Preparation of the first dipping solution: the sorbitol glycidyl ether, ε-caprolactam-terminated diphenylmethane diisocyanate, phenol-terminated isophorone diisocyanate and deionized water were added into the beaker. The mixture was strongly stirred at 500rpm with an electric stirrer at 25°C for 1.5h.

Preparation of the second dipping solution: Nano titanium dioxide and deionized water were added to the beaker. The mixed solution of modifier KH550/ethanol (KH550/ ethanol by volume ratio of 2:1, Ethanol (purity≥95wt%)) (the weight of KH550 is 10wt% of the filler) was slowly added to the mixed solution of nano titanium dioxide and deionized water. Then, the mixture was stirred and ultrasonic treated, the power of ultrasonic equipment was 400W and the time of ultrasonic stirring was 1h. Then, the mixture was performed with ultrasonic stirring and get dispersed modified nano filler. Next, all components (except latex) were dissolved in deionized water at a predetermined weight ratio. The solution was strongly stirred at 500rpm with an electric stirrer at 25°C for 2h. Finally, the styrene-butadiene-vinylpyridine latex was added to the solution. The mixed solution was strongly stirred at 25°C for 2.5h. During stirring, potassium hydroxide was added to adjust the pH of the solution to 8.7.

Dipping method: the fiber cords were immersed in the first dipping solution at room temperature for 3 seconds. Then, the cords were dried and cured in an oven. The drying temperature was 150°C, the drying time was 1.5min, the curing temperature was 230°C, and the curing time was 1.5min. Next, the pre-impregnated cords were immersed in the second dipping solution for 3 seconds. The cords were dried and cured in an oven. The drying temperature was 150°C, the drying time was 1.5min, the curing temperature was 240°C, and the curing time was 2min.

### Example 13

An eco-friendly impregnation treatment system for fiber cords, the proportion of two-step dipping process formula by weight is as follows:

| | |
|---|---|
| Formula of the first-step dipping solution | 100 parts of deionized water |
| | 1.5 parts of sorbitol glycidyl ether |
| | 5 parts of ε-caprolactam-terminated diphenylmethane diisocyanate |
| Formula of the second-step dipping solution | 100 parts of deionized water |
| | 2.5 parts of maleic anhydride grafted polybutadiene (grafting rate 50%) |
| | 2.5 parts of glycerol triglycidyl ether |
| | 0.3 parts of 1-cyanoethyl-2-ethyl-4-methylimidazole |
| | 8 parts of modified nanocellulose |
| | 100 parts of styrene-butadiene-vinylpyridine latex (solid content 40wt%) |

The preparation method of the dipping solution was the same as that of example 12.

Dipping method: the fiber cords were immersed in the first dipping solution for 3 seconds. Then, the cords were dried and cured in an oven. The drying temperature was 150°C, the drying time was 1.5min, the curing temperature was 220°C, and the curing time was 1.5min. Next, the pre-impregnated cords were immersed in the second dipping solution at room temperature for 3 seconds. The cords were dried and cured in an oven. The drying temperature was 150°C, the drying time was 1.5min, the curing temperature was 230°C, and the curing time was 2min.

### Example 14

An eco-friendly impregnation treatment system for fiber cords, the proportion of two-step dipping process formula by weight is as follows:

| | |
|---|---|
| Formula of the first-step dipping solution | 100 parts of deionized water |
| | 1.5 parts of sorbitol glycidyl ether |
| | 5 parts of ε-caprolactam-terminated diphenylmethane diisocyanate |
| Formula of the second-step dipping solution | 100 parts of deionized water |
| | 1 parts of maleic anhydride grafted polybutadiene (grafting rate 50%) |
| | 4 parts of ethylene glycol diglycidyl ether |
| | 0.3 parts of trimellitic anhydride |
| | 5 parts of modified graphene oxide |
| | 60 parts of styrene-butadiene-vinylpyridine latex (solid content 40wt%) and 20 parts of natural rubber latex (solid content 60wt%) |

The preparation method of the dipping solution was the same as that of example 12.

Dipping method: the fiber cords were immersed in the first dipping solution at room temperature for 3 seconds. Then, the cords were dried and cured in an oven. The drying temperature was 150°C, the drying time was 1.5min, the curing temperature was 230°C, and the curing time was 1.5min. Next, the pre-impregnated cords were immersed in the second dipping solution at room temperature for 3 seconds. The cords were dried and cured in an oven. The drying temperature was 150°C, the drying time was 1.5min, the curing temperature was 250°C, and the curing time was 2min.

### Example 15

An eco-friendly impregnation treatment system for fiber cords, the proportion of two-step dipping process formula by weight is as follows:

| | |
|---|---|
| Formula of the first-step dipping solution | 100 parts of deionized water |
| | 1.5 parts of sorbitol glycidyl ether |
| | 5 parts of ε-caprolactam-terminated diphenylmethane diisocyanate |
| Formula of the second-step dipping solution | 100 parts of deionized water |
| | 2.5 parts of maleic anhydride grafted polybutadiene (grafting rate 30%) |
| | 2.5 parts of ethylene glycol diglycidyl ether |
| | 0.3 parts of 1-cyanoethyl-2-ethyl-4-methylimidazole |
| | 3 parts of modified montmorillonite and 2 parts of modified carbon nanotubes |
| | 50 parts of styrene-butadiene-vinylpyridine latex (solid content 40wt%) and 20 parts of natural rubber latex (solid content 60wt%) |

The preparation method of the dipping solution was the same as that of example 12.

Dipping method: the fiber cords were immersed in the first dipping solution at room temperature for 3 seconds. Then, the cords were dried and cured in an oven. The drying temperature was 150°C, the drying time was 1.5min, the curing temperature was 230°C, and the curing time was 1.5min. Next, the pre-impregnated cords were immersed in the second dipping solution at room temperature for 3 seconds. The cords were dried and cured in an oven. The drying temperature was 150°C, the drying time was 1.5min, the curing temperature was 240°C, and the curing time was 2min.

### Comparative example 4

Traditional RFL impregnated aramid cords are used in the contrast example 4. The proportion of two-step RFL dipping process formula by weight is as follows:

| | |
|---|---|
| Formula of the pre-impregnation dipping solution | 100 parts of deionized water |
| | 1.5 parts of sorbitol glycidyl ether |
| | 5 parts of ε-caprolactam-terminated diphenylmethane diisocyanate |
| Formula of RFL dipping solution | 100 parts of deionized water |
| | 3.7 parts of resorcinol |
| | 5.4 parts of formaldehyde (37wt%) |
| | 0.1 parts of sodium hydroxide (100wt%) |
| | 80 parts of VP latex (solid content 40wt%) |
| | 1 part of ammonia water (25wt%) |

The preparation method of the pre-impregnation dipping solution: the sorbitol glycidyl ether, ε-caprolactam-terminated diphenylmethane diisocyanate and deionized water were added into the beaker. The mixture was strongly stirred at 500rpm with an electric stirrer at 25°C for 1.5h.

The preparation method of RFL dipping solution: 0.1 parts of sodium hydroxide and 100 parts of deionized water were added into the beaker. The mixture was strongly stirred at 500rpm with an electric stirrer at 25°C for 10min. Then, 3.7 parts of resorcinol was added into the mixture for stirring another 10min. The mixture was stirred for 6h followed by addition of 5.4 parts of formaldehyde (37wt%) solution, and get a homogeneous solution. The mixture was mixed with 80.0 parts of VP latex(solid content: 40wt%) for 20h at room temperature. Before the end of the stirring, 1.0 parts of ammonia water was added into the solution, and finally get the RFL dipping solution.

Dipping method: the fiber cords were immersed in the pre-impregnation dipping solution at room temperature for 3 seconds. Then, the cords were dried and cured in an oven. The drying temperature was 150°C, the drying time was 1.5min, the curing temperature was 230°C, and the curing time was 1.5min. Next, the pre-impregnated cords were immersed in RFL dipping solution at room temperature for 3 seconds. The cords were dried and cured in an oven. The drying temperature was 150°C, the drying time was 1.5min, the curing temperature was 250°C, and the curing time was 1.5min.

The dipping solution preparation method and dipping method of Contrast example 5, 6 is the same as that of Contrast example 4. Aramid cords (1670dtex/2) were used in Contrast example 4. Polyester cords (1400dtex/2) were used in Contrast example 5. Aramid/nylon 66 twisted cords (A1670dtex/1+N1400dtex/1) were used in Contrast example 6.

The fiber cords of examples 11-15 and comparative examples 4-6 were dipped and tested according to the above method. The result of H pull-out force test, peel test and tensile strength test are shown in Table 2.

**Table 2 the test results of fiber cords treated by a two-step dipping process**

| Group | Fiber type | Sample characteristics | Adhesive property | | | Tensile strength (N) |
|---|---|---|---|---|---|---|
| | | | H pull-out value (N) | Peel force value (N) | coverage rating | |
| Example 11 | AF (1670dtex/2) | 2.5 parts of EP+2.5 parts of PBMA+no filler | 168.9±14.2 | 19.2±1.2 | A | 503.4±4.4 |
| Example 12 | PET (1440dtex/2) | 4 parts of EP+1 parts of PBMA+18 parts of modified nano titanium dioxide | 187.6±14.0 | 22.8±1.0 | A | 189.6±3.2 |
| Example 13 | AF/PA66 (A1670dtex/1+N140 Odtex/1) | 2.5 parts of EP+2.5 parts of PBMA+8 parts of modified nano cellulose | 213.2±16.7 | 24.1±1.3 | A | 305.2±2.8 |
| Example 14 | AF (1670dtex/2) | 4 parts of EP+1 parts of PBMA+5 parts of modified graphene oxide | 201.3±12.1 | 23.5±1.8 | A | 502.2±3.2 |
| Example 15 | PET (1440dtex/2) | 2.5 parts of EP+2.5 parts of PBMA+3 parts of modified montmorill onite and 2 parts of modified carbon nanotubes | 186.2±15.2 | 22.2±0.7 | A | 189.2±2.9 |
| Contrast example 4 | AF/PA66 (A1670dtex/1+N140 0dtex/1) | RFL | 170.4±13.2 | 19.3±1.8 | A | 503.5±4.2 |
| Contrast example 5 | AF (1670dtex/2) | RFL | 161.6±12.6 | 18.4±1.3 | A | 189.9±3.4 |
| Contrast example 6 | PET (1440dtex/2) | RFL | 171.7±14.6 | 19.8±1.5 | A | 304.2±3.5 |

| | | | | | | |
|---|---|---|---|---|---|---|
| Remarks: EP refers to epoxy resin and PBMA refers to maleic anhydride grafted polymer. | | | | | | |

In table 2, the H pull-out value and peel force value of Example 11 (with no filler) is equivalent to that of the RFL treatment of the Contrast example 4. The H pull-out value of Example 12-15 (with modified filler) is about 15%-20% higher than that of the RFL, and the peel force value is also higher than that of the RFL. This shows that the new eco-friendly dipping system on the fiber surface has excellent adhesion effects, reaching or even exceeding the adhesion level of RFL treatment. According to Examples 11-15, the addition of modified fillers further improves the adhesion between cords and rubber, which is consistent with the result of Examples 1-10. In all examples, the rubber coverage rating of stripped fiber cords reaches 100%. This shows that the dipping system has a stable adhesion effect and can meet the application requirements. In addition, the tensile strength of PET cords and aramid will not be significantly reduced and will not affect its use after being treated by this method.

## Claims

1. A composition for fiber surface treatment **characterized in that** it comprises maleic anhydride polymer, epoxy resin, blocked isocyanate, curing agent, rubber latex; solvent and optional filler.

2. The composition according to claim 1, wherein the composition comprises;
100 parts by weight of solvent;
0.1-5 parts, preferably 0.5-2.5 parts by weight of maleic anhydride polymer;
0.1-5 parts, preferably 1-4 parts by weight of epoxy resin;
1-8 parts, preferably 2-4 parts by weight of blocked isocyanate;
0.1-1 parts, preferably 0.2-0.6 parts by weight of curing agent;
50-150 parts, preferably 70-120 parts by weight of latex;
0-30 parts, preferably 2-20 parts by weight of filler.

3. The composition of according to claim 1 or 2, wherein the maleic anhydride
polymer is selected from at least one of maleic anhydride grafted polybutadiene, maleic anhydride grafted polyisoprene, and maleic anhydride grafted styrene-butadiene binary copolymer;
preferably, the grafting rate of maleic anhydride is 10-50%, the number average molecular weight of maleic anhydride polymer is 3000-10000.

4. The composition according to claims 1 to 3, wherein the epoxy resin is selected from at least one of bisphenol A epoxy resin, epoxidized linear phenolic resin, ethylene glycol diglycidyl ether, polyethylene glycol diglycidyl ether, 1,2-propanediol diglycidyl ether, polypropylene glycol diglycidyl ether, 1,4-butanediol diglycidyl ether, polybutylene glycol diglycidyl ether, glycerol triglycidyl ether, sorbitol glycidyl ether, trimethylolpropane glycidyl ether, tetraphenol ethane tetraglycidyl ether epoxy resin, resorcinol bisglycidyl ether type epoxy and bisresorcinol formal tetraglycidyl ether.

5. The composition according to claims 1 to 4, wherein the curing agent is selected from at least one of imidazole curing agent, amine curing agent and/or anhydride curing agent;
preferably, the imidazole curing agent is selected from at least one of 2-methylimidazole, 2-ethyl-4-methylimidazole, 2-undecylimidazole, 2-heptadecylimidazole, 2-phenylimidazole, 1-benzyl-2-methylimidazole, 1-cyanoethyl-2-methylimidazole, 1-cyanoethyl-2-ethyl-4-methylimidazole, and 1-cyanoethyl-2-undecylimidazole;
preferably, the amine curing agent is selected from at least one of hyperbranched polyamide, hyperbranched polyethyleneimine, supramolecular polyoxyethylene amine, polyoxyethylene diamine, and polyamide;
preferably, the anhydride curing agent is selected from at least one of phthalic anhydride, tetrahydrophthalic anhydride, hexahydrophthalic anhydride, trimellitic anhydride glyceride, methylhexahydrophthalic anhydride, methylnadic anhydride, pyromellitic anhydride, ethylene glycol trimellitic anhydride, methylcyclohexene tetraacetic anhydride, trimellitic anhydride and polynonylanhydride.

6. The composition according to claims 1 to 5, wherein the blocked isocyanate is selected from at least one of trimethyl-1,6-hexamethylene diisocyanate, tetramethylene diisocyanate, tetramethylenediisocyanate, 2,4-toluene diisocyanate, 2,6-toluene diisocyanate, 1,3-benzene diisocyanate, 1,4-phenyldiisocyanate, isophorone diisocyanate and diphenylmethane diisocyanate; and
the blocking agent is selected from ε-caprolactam, butanone oxime, and phenol.

7. The composition of according to claims 1 to 6, wherein the solvent is aqueous solvents, preferably water, more preferably deionized water;
the fillers are selected from at least one of nano silica, carbon black, nano titanium dioxide, nano zinc oxide, nano iron oxide, nano calcium oxide, nano calcium carbonate, carbon nanotubes, attapulgite, nano cellulose, halloysite, nano aramid fiber, basalt fiber, nano whisker, graphene oxide, montmorillonite, mica, kaolin, and hydrotalcite.

8. The composition according to claims 1 to 7, wherein the filler is treated with a surface modifier;
preferably, the surface modifier is selected from at least one of amino silane coupling agent, epoxy silane coupling agent, alkyl silane coupling agent, isocyanate-based silane coupling agent and polyether silane coupling agent;
γ-aminopropyltriethoxysilane (KH550), γ-glycidoxypropyl trimethoxysilane (KH560), γ- methacryloxypropyl trimethoxysilane (KH570), γ-mercaptopropyltriethoxysilane (KH580), bis-[y-(triethoxysilyl)propyl] tetrasulfide (Si69) and vinyl triethoxy silane are preferably used.

9. The composition according to claims 1 to 8, wherein the rubber latex is selected from at least one of butylpyridyl latex, styrene-butadiene latex, styrene-butadiene-vinylpyridine latex, neoprene latex, nitrile latex, chlorosulfonated polyethylene latex, and natural latex;
preferably, the solid content of the rubber latex is 20 ∼ 60wt%.

10. A process for treating a fiber surface, wherein the process comprises:
in step 1), the fibers were immersed in the dipping solution, wherein the dipping solution is prepared from the composition according to claims 1-9;
in step 2), dry and solidify the impregnated fiber obtained from step 1).

11. The process according to claim 10, wherein the impregnation temperature is 15-40°C, and the impregnation time is 2-60s; the drying temperature is 100-150 °C, and the drying time is 1-10 min; the temperature for curing is 180-260 °C, and the time for curing is 1-10 min, the pH value of the dipping solution is adjusted to be 8.0-11.0 before impregnation.

12. A process for treating a fiber surface, wherein the process comprises:
in step A), the fibers are immersed in the first dipping solution, the first dipping solution comprises the first epoxy resin, blocked isocyanate and solvent;
in step B), the fibers immersed in step A) are dried and then cured;
in step C), the fibers treated in step B) are immersed in the second dipping solution, the second dipping solution comprises maleic anhydride polymer, the second epoxy resin, curing agent, rubber latex, solvent and optional filler;
in step D), the fibers treated in step C) are dried and then cured.

13. The process according to claim 12, wherein in step A), the impregnation temperature is 15-40°C, and the impregnation time is 2-30s; in step B), the drying temperature is 100-150 °C, and the drying time is 1-10 min;
in step B), the temperature for curing is 180-250 °C, and the time for curing is 1-10 min.

14. The process according to claim 12 or 13, wherein, in step C), the impregnation temperature is 15-40°C, and the impregnation time is 2-60s;
in step D), the drying temperature is 100-150 °C, and the drying time is 1-10 min;
in step D), the temperature for curing is 180-260 °C, and the time for curing is 1-10 min.

15. The process according to claims 12 to 14, wherein the pH of the second dipping solution is adjusted to be higher than 7.5, preferably 8.0-11.0.

16. The process according to claims 12 to 15, wherein the maleic anhydride polymer is selected from at least one of maleic anhydride grafted polybutadiene, maleic anhydride grafted polyisoprene, and maleic anhydride grafted styrene-butadiene binary copolymer;
preferably, the grafting rate of maleic anhydride is 10-50%, the number average molecular weight of maleic anhydride polymer is 3000-10000;
the epoxy resin is water-soluble, preferably the epoxy resin is selected from at least one of bisphenol A epoxy resin, epoxidized linear phenolic resin, ethylene glycol diglycidyl ether, polyethylene glycol diglycidyl ether, 1,2-propanediol diglycidyl ether, polypropylene glycol diglycidyl ether, 1,4-butanediol diglycidyl ether, polybutylene glycol diglycidyl ether, glycerol triglycidyl ether, trimethylolpropane glycidyl ether, tetraphenol ethane tetraglycidyl ether epoxy resin, sorbitol glycidyl ether, resorcinol bisglycidyl ether type epoxy, and bisresorcinol formal tetraglycidyl ether;
the curing agent is selected from at least one of imidazole curing agent, amine curing agent and/or anhydride curing agent;
preferably, the imidazole curing agent is selected from at least one of 2-methylimidazole, 2-ethyl-4-methylimidazole, 2-undecylimidazole, 2-heptadecylimidazole, 2-phenylimidazole, 1-benzyl-2-methylimidazole, 1-cyanoethyl-2-methylimidazole, 1-cyanoethyl-2-ethyl-4-methylimidazole and 1-cyanoethyl-2-undecylimidazole;
preferably, the amine curing agent is selected from at least one of hyperbranched polyamide, hyperbranched polyethyleneimine, supramolecular polyoxyethylene amine, polyoxyethylene diamine and polyamide;
preferably, the anhydride curing agent is selected from at least one of phthalic anhydride, tetrahydrophthalic anhydride, hexahydrophthalic anhydride, trimellitic anhydride glyceride, methylhexahydrophthalic anhydride, methylnadic anhydride, pyromellitic anhydride, ethylene glycol trimellitic anhydride, methylcyclohexene tetraacetic anhydride, trimellitic anhydride and polynonylanhydride;
preferably, the blocked isocyanate is formed by isocyanate and blocking agent; the isocyanate is selected from at least one of trimethyl-1,6-hexamethylene diisocyanate, tetramethylene diisocyanate, tetramethylenediisocyanate, 2,4-toluene diisocyanate, 2,6-toluene diisocyanate, 1,3-benzene diisocyanate, 1,4-phenyldiisocyanate, isophorone diisocyanate and diphenylmethane diisocyanate; the blocking agent is selected from at least one of ε-caprolactam, butanone oxime and phenol;
the solvent is aqueous solvents; the solvent is preferably water, more preferably deionized water;
the fillers are selected from at least one of nano silica, carbon black, nano titanium dioxide, nano zinc oxide, nano iron oxide, nano calcium oxide, nano calcium carbonate, carbon nanotubes, attapulgite, nano cellulose, halloysite, nano aramid fiber, basalt fiber, nano whisker, graphene oxide, montmorillonite, mica, kaolin and hydrotalcite;
the rubber latex is selected from at least one of butylpyridyl latex, styrene-butadiene latex, styrene-butadiene-vinylpyridine latex, neoprene latex, nitrile latex, chlorosulfonated polyethylene latex and natural late;
preferably, the solid content of the rubber latex is 20 ~ 60wt%.

17. The process according to claims 12 to 16, wherein the filler is treated with a surface modifier;
preferably, the surface modifier is selected from at least one of amino silane coupling agent, epoxy silane coupling agent, alkyl silane coupling agent, isocyanate-based silane coupling agent and polyether silane coupling agent; and
preferably selected from at least one of γ-aminopropyltriethoxysilane (KH550), γ-glycidoxypropyl trimethoxysilane (KH560), γ- methacryloxypropyl trimethoxysilane (KH570), γ- mercaptopropyltriethoxysilane (KH580);
bis-[y-(triethoxysilyl)propyl] tetrasulfide (Si69) and vinyl triethoxy silane(A151) are preferably used.

18. The process according to claims 12 to 17, wherein the weight parts of each component in the first dipping solution are as follows:
100 parts of solvent;
0.5-4 parts, preferably 0.5-2.5 parts of the first epoxy resin;
2-10 parts, preferably, 4-8 parts of blocked isocyanate.

19. The process according to claims 12 to 18, wherein the weight parts of each component in the second dipping solution are as follows:
100 parts of solvent;
1-2.5 parts of maleic anhydride polymer;
1-5 parts, preferably, 2.5-4 parts of the second epoxy resin;
0.1-1 parts, preferably 0.2-0.6 parts of curing agent;
50-150 parts, preferably 70-120 parts of rubber latex;
0-30 parts, preferably 2-20 parts of filler.

20. The process according to claims 12 to 19, wherein the fibers are selected from rayon, nylon 6, nylon 66, meta or para aramid fiber, polyethylene terephthalate (PET), polyethylene naphthalate (PEN), polyimide Amine, carbon fiber, also including a combination of two or more of all the fibers mentioned;
the forms of the fibers are selected from single silk, bundle silk, twisted cord, canvas, cord cloth or a combination thereof.
